# EUROPEAN PATENT SPECIFICATION

(11) **EP 2 828 645 B1**
(45) Date of publication and mention of the grant of the patent: **20.11.2019**
(21) Application number: 13713326.0
(22) Date of filing: 18.03.2013
(51) Int. Cl.: G01N 21/88

(54) **DIGITAL LIGHT MASKING SYSTEMS AND METHODS FOR AUTOMATED IMAGE INSPECTION**
DIGITALE LICHTMASKIERUNGSSYSTEME UND VERFAHREN ZUR AUTOMATISIERTEN BILDINSPEKTION
SYSTÈMES NUMÉRIQUES DE MASQUAGE DE LUMIÈRE ET PROCÉDÉS POUR INSPECTION AUTOMATISÉE D'IMAGE

(30) Priority: 22.03.2012 US 201261614153 P; 08.05.2012 US 201213466391; 08.05.2012 US 201213466376
(43) Date of publication of application: 28.01.2015
(73) Proprietor: The Procter & Gamble Company, Cincinnati, OH 45202 (US)
(72) Inventor: BERTIN, Jeremy, Georges, Plainfield, Ontario K0K 2V0 (CA); SINGH, Rajesh, Kumar, Hogansaville, GA 30230 (US)
(74) Representative: P&G Patent Germany
(86) International application number: PCT/US2013/032749
(87) International publication number: WO 2013/142397

(56) References cited:
- EP-A2- 1 777 490
- WO-A1-2008/124397
- WO-A1-2011/023832
- US-A1- 2008 111 989

## Description

### FIELD OF THE INVENTION

The present application relates generally to digital light masking systems and methods for automated image inspection. More specifically, the present application relates to online machine vision inspection methods which employ LCD panel digital light masking systems.

### BACKGROUND OF THE INVENTION

EP-A-1777490, published on April 25th 2007; discloses a method for inspecting an object using a light measurement system that includes a light source and an imaging sensor comprising the steps of: emitting light from the light source, dispersing light emitted from the light source into one of a diffraction pattern and an interference pattern, and imaging the patterned light onto the object using a lens. Image inspection systems of the prior art are known from WO-2011/023832 and US-2008/111989.

Within the field of automated image inspection, *backlighting* is a common illumination technique used to generate high levels of contrast between an object under inspection and a background. A backlit imaging setup typically consists of a highly uniform light source spanning a defined area behind the object under inspection. The effectiveness of the backlighting technique is directly proportional to the relative difference in *opacity* (or alternatively, *transmissivity*) between the object under inspection and the background medium.

A commonly encountered problem with a backlit imaging setup occurs when inspecting objects with the characteristic of non-uniform opacity. The negative effects caused by non-uniform opacity can apply to both the object under inspection as well as the background. Under circumstances involving such variation, the optimum set-point for backlight intensity must take into account the average opacities involved which typically results in various bright and dark regions in the resultant image for inspection. The presence of such image artifacts will result in a degraded signal-to-noise (SNR) ratio which will negatively affect both the precision and accuracy of the imaging systems measurements.

In order to mitigate the negative imaging effects of objects of non-uniform opacity, the concept of a *zoned-backlight* is introduced. A zoned-backlight is implemented by subdividing a uniform backlight into various discrete regions, or zones, which can be individually adjusted to specific light output intensities. This provides for a mechanism to compensate for the localized regions of non-uniform opacity contained within the object under inspection (or background). The effectiveness of this approach will be inversely proportional to the areas of the subdivided regions; the smaller the region, the higher the resolution for lighting compensation.

To date, very few lighting companies offer the option of a commercially available zoned-backlight for automated image inspection purposes. Furthermore, in the few instances where zoned-backlight capability is offered, the resolution is far too coarse to be of any practical use for automated image inspection of highly non-uniform objects such as disposable absorbent products.

In all commercially available cases, the methodology for implementing rudimentary zoned-backlighting is through the discrete grouping and control of the *light source elements* (typically Light- Emitting Diodes (LEDs)). This approach is limited by the complexity of the electronics required to independently control the amount of current/voltage in each LED zone and results in only a handful of such zones ever being practically achieved. As an example, the number of independent zones possible through the use of a single Pulsar 710 series controller from Advanced Illumination is limited to four zones. This previously-established method of achieving coarse lighting compensation for automated image inspection involves the discrete grouping and intensity control of the light *emitting* source elements (*e.g.* LEDs). This method results in low-fidelity compensation due to the fact that a large number of independent groups are practically difficult to implement and calibrate.

Accordingly, there is a need for an alternative methodology to the concept of discrete zones and zoned-backlight. There is a desire for a digital light masking system and method for automated image inspection which is fundamentally different than traditional lighting methods currently available in the marketplace today. Due to the challenges of inspecting objects having greater levels of detail and complexity, we would need to create complex arrangements of electronics (e.g., controllers, actuators, amplifiers, and the like) which is both cost-prohibitive and space-prohibitive. Thus, there is a desire for a system which is more cost-effective and easier to reproduce. Additionally, there is a need for higher resolution lighting systems to inspect these higher-detail objects. These are all goals of the present invention; embodiments described herein may achieve various combinations of these goals. A particular embodiment may, but need not, embody every goal.

### SUMMARY OF THE INVENTION

The present invention is directed to a method for automated image inspection, comprising the steps of: generating a video signal; providing a uniform source light which outputs emitted light; providing a digital light mask which attenuates the emitted light; directing the attenuated light towards an article; and inspecting the article with a vision system wherein the the video signal determines a digital light mask compensation.

In addition, the present invention is directed to methods for automated image inspection, wherein the uniform source light is an LED light, wherein the digital light mask is an LCD panel, wherein the attenuated light is directed towards a disposable absorbent article, and/or wherein the vision system comprises a camera.

### BRIEF DESCRIPTION OF THE DRAWINGS

It is to be understood that both the foregoing general description and the following detailed description describe various systems and methods and are intended to provide an overview or framework for understanding the nature and character of the claimed subject matter. The accompanying drawings are included to provide a further understanding of the various systems and methods, and are incorporated into and constitute a part of this specification. The drawings illustrate various systems and methods described herein, and together with the description serve to explain the principles and operations of the claimed subject matter.
FIG. 1 depicts a flowchart of a prior art automated image inspection method;
FIG. 2 depicts a flowchart of the new automated image inspection method according to systems and methods disclosed herein;
FIG. 3 illustrates an exemplary traditional backlighting system;
FIG. 4 illustrates an exemplary traditional frontlighting system;
FIG. 5 depicts a typical LCD construction (single pixel);
FIG. 6 illustrates a first exemplary frontlighting system according to systems and methods disclosed herein;
FIG. 7 illustrates a first exemplary backlighting system according to systems and methods disclosed herein;
FIGS. 7A and 7B illustrate the system of FIG. 7, showing that particular components of an article may be isolated for improved inspection results;
FIG. 8 shows an image of an exemplary disposable absorbent article wherein the article is under/over exposed;
FIG. 9 depicts the inverse of FIG. 8 and illustrates an ideal image compensation;
FIG. 10 depicts a superimposition of several instances of FIG. 9, representing typical process variation;
FIG. 11 shows an optical path of an LCD pixel affecting camera CCD pixel light;
FIG. 12A shows an uncorrected image of an exemplary disposable absorbent article;
FIG. 12B shows an image of an exemplary disposable absorbent article which was corrected according to the systems and methods described herein;
FIGS. 13A - 13F comprise a sequence of 2D images illustrating increasing fidelity of approximation to FIG. 10 as the number of zones increases throughout the sequence;
FIGS. 14A - 14F comprise a sequence of 3D images illustrating increasing fidelity of approximation to FIG. 10 as the number of zones increases throughout the sequence;
FIG. 15 illustrates achievement of a continuous field;
FIGS. 16A and 16B show a cross-sectional plot spanning seven adjacent zones;
FIGS. 17A and 17B show a cross-sectional plot assuming 33% diffusion; and
FIGS. 18A and 18B show a cross-sectional plot spanning thousands of adjacent LCD backlight pixels.

### DETAILED DESCRIPTION OF THE INVENTION

As used herein, the term "absorbent article" includes disposable articles such as sanitary napkins, panty liners, tampons, pessaries, interlabial devices, wound dressings, diapers, adult incontinence pads, wipes, other hygiene products, and combinations thereof. At least some of such absorbent articles are intended for the absorption of body liquids, such as menses or blood, vaginal discharges, urine, and feces. Wipes may be used to absorb body liquids, or may be used for other purposes, such as for cleaning surfaces or washing faces. Various absorbent articles described above will typically comprise a liquid pervious topsheet, a liquid impervious backsheet joined to the topsheet, and an absorbent core between the topsheet and backsheet.

As used herein, the term "component" of an absorbent article refers to an individual constituent of an absorbent article, such as a topsheet, acquisition layer, liquid handling layer, absorbent core or layers of absorbent cores, backsheets, and barriers such as barrier layers and barrier cuffs. In some embodiments, a "material" is equivalent to a component, while in other embodiments a material is more broadly defined as a substrate or portion of an article.

As used herein, the term "cross-machine direction", "cross direction", or "CD" means the path that is perpendicular to the machine direction in the plane of the web.

As used herein, the term "disposable" describes absorbent articles and other products which are not intended to be laundered or otherwise restored or reused as an absorbent article or product (i.e., they are intended to be discarded after use and, preferably, to be recycled, composted or otherwise disposed of in an environmentally compatible manner).

As used herein, the term "machine direction" or "MD" means the path that material, such as a web, follows through a manufacturing process.

It is to be understood that references to source light, backlight, frontlight, sidelight, toplight, bottomlight, bright and dark fields, and other structural lighting formats may be used throughout the specification and claims herein; these references are meant to enable the entire group of structural lighting formats.

Also, while the examples discussed herein refer to using light to compensate for the illumination of an article, it is to be understood that the examples also encompass the reverse: compensating for the lighting of a background.

### Overview of the Systems and Methods

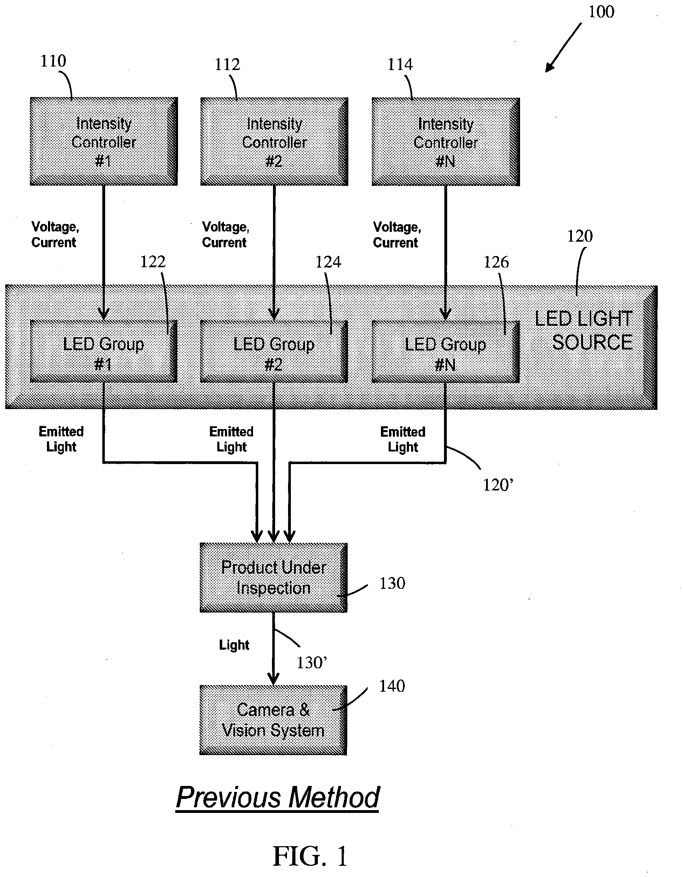

The systems and methods described herein relate to digital light masking systems and methods for automated image inspection. The present invention provides an alternative to creating adjustable lighting zones by controlling the relative *transmission* of the source light through an intermediate medium (e.g. liquid crystal display (LCD) mask) rather than attempting to control the light *emission* directly, as was the case with zoned-backlight methods, as shown in FIG. 1. This traditional method of lighting 100 uses a hard-wired configuration. A plurality of intensity controllers 110, 112, 114 provide voltage and current to an LED light source 120 that comprises a plurality of LED zones (or groups) 122, 124, 126. The LED light source 120 could feasibly comprise 10,000 individual LEDs broken up into around eight zones (it is difficult to achieve more than twelve zones because a controller for each group is needed to control voltage and current). The LED light source 120 emits light 120' towards a product under inspection 130. The filtered light 130' passes through and around the product 130, providing sufficient lighting for a camera and/or vision system 140 to capture an inspection image.

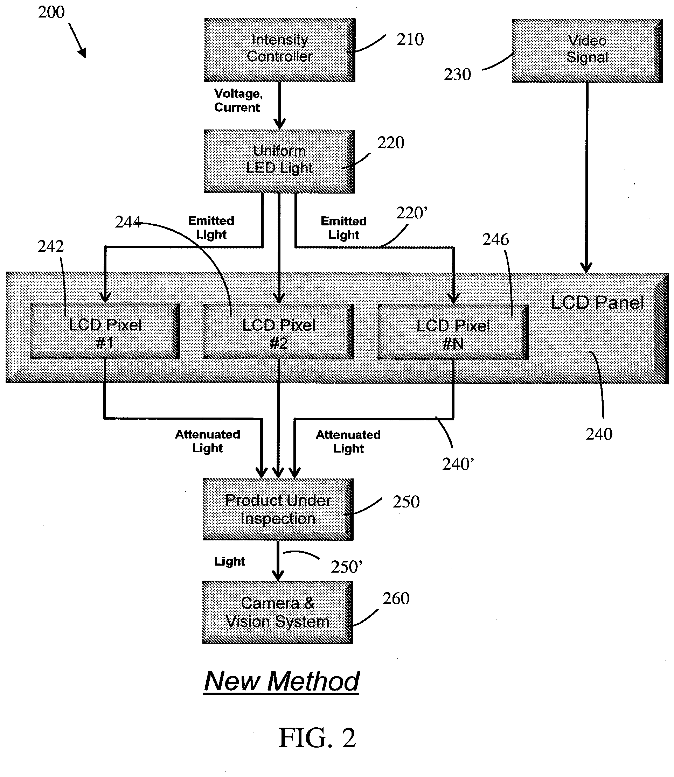

The inventive methods do not rely on the discrete zoning of light. Instead, the methods rely on a smooth, continuously variable attenuation *field,* as shown in FIG. 2. FIG. 2 illustrates the automated image inspection method 200 of the present invention. An intensity controller 210 provides voltage and current to a uniform source light 220. The source light 220 may be an LED light, infrared light, ultraviolet light, white light, or the like, or combinations thereof. Suitably, the source light 220 is a high-efficiency light, meaning that the light source does not generate excessive heat from a safety standpoint. The source light 220 works with any spectrum of visible light, whether monochrome or color. Suitably, the source light 220 is an LED light; an LED light typically generates little to no excessive heat, takes up a small area, has a long lifetime, and is very safe. When the uniform source light 220 is monochrome, higher intensity light is generally emitted (for instance, due to a lack of color filtration). When the uniform source light 220 is color, lower intensity light is generally emitted; however, color source light yields full color adjust, which is desirable. The uniform source light 220 may be a backlight, frontlight, sidelight, toplight, bottomlight, or combination thereof. The uniform source light 220 supplies emitted light 220' to a digital light mask 240.

The digital light mask 240 is an LCD panel (or screen) which comprises at least one LCD pixel 242, 244, 246 that attenuates the emitted light 200'. Suitably, the digital light mask 240 comprises a plurality of pixels 242, 244, 246.

A video signal 230 is generated and input into the digital light mask 240. Every pixel is controlled by the video signal 230. The video signal 230 may be a dedicated device such as a computer or the like. The video signal 230 is very high resolution, and comprises, for instance, at least twenty pixels. The video signal 230 determines the digital light mask compensation. The compensation can provide a digital repeatability benefit.

The digital light mask 240 may be monochrome or color and static or dynamic. A strobe light providing a pulse of light may be used versus a continuous light. The attenuated light 240' forms complex lighting patterns, such as curved lines (whereas basic complex patterns include standard grid patterns and the like). The attenuated light 240' is directed towards a product 250 or material such that the product 250 or material may be inspected.

The product 250 is a manufactured product such as a mobile phone part, an automotive part, a garment, an absorbent article, another type of product which is typically inspected, or the like. Suitably, the product 250 is an absorbent article or a component thereof. Even more suitably, the product 250 is a disposable absorbent article selected from sanitary napkins, panty liners, diapers, adult incontinence pads, or components thereof.

The attenuated light 240' is reflected, transmitted, or absorbed by the product 250 to create visible contrast of features or components. At least the transmitted light 250' passes through and around the product 250, providing sufficient lighting for vision system 260 to capture an inspection image. The vision system 260 may comprise a camera. The camera may be monochrome or color. Suitably, the camera is monochrome. The source light 220 and digital light mask 240 combination can be used to enhance the contrast of desired features or components of the product 250 via reflection, transmission, absorption, or combinations thereof. The vision system 260 is an online vision system, meaning that it is incorporated into a manufacturing line to inspect products 250 in a timely fashion. A file will represent the 2D image of the object under inspection. The file and inspection image are used to inspect the product 250.

The novelty of the digital light masking systems and methods described herein involves manipulation of the desired lighting profile through the *attenuation* of light rather than controlling the light *emission.* This approach makes use of commercially available color or monochrome LCD panels. The systems of the present invention generate complex lighting patterns for automated image inspection, such as online machine-vision based inspection. This innovation provides exact lighting compensation to correct automated image inspection system (*e.g*., machine vision system) imaging deficiencies due to product/material variation (density, opacity, etc.) resulting in higher fidelity imaging of products/materials under inspection and reduced scrap costs. Also, colored portions of products may be inspected or monitored. This digital light mask provides an extremely high resolution and digitally repeatable compensation method versus traditional approaches. Lighting correction requires no processing time on behalf of the inspection system. For example, image subtraction through the use of a programmable physical attenuation field requires no processing time. This digital light mask can be beneficially applied to any manufacturing process involving quality/scrap losses associated with poor machine vision inspection images. Static or dynamic (per-product or rolling average) digital light masks are within the scope of this invention.

The inventive systems and methods described herein are very different and greatly improved over traditional zoned-backlighting systems and methods. For instance, the inventive system uses uniform light and modifies it with a digital light mask, whereas the traditional zoned-backlight system employs zones of light. In addition, the inventive system relies upon attenuated light, whereas the traditional zoned-backlight system relies upon emitted light. The inventive system uses a mask to block the light we don't want, whereas the traditional zoned-backlight controls how much light is sourced. Also, the inventive system enables the use of color and monochrome/visible white light whereas the traditional zoned-backlight system made it very difficult to use color because doing so would require the use of triple controllers for red, green, and blue. With the present inventions, any possible range of colors may be provided. Further, the inventive system is operable with only one controller, whereas the traditional zoned-backlight system required multiple controllers.

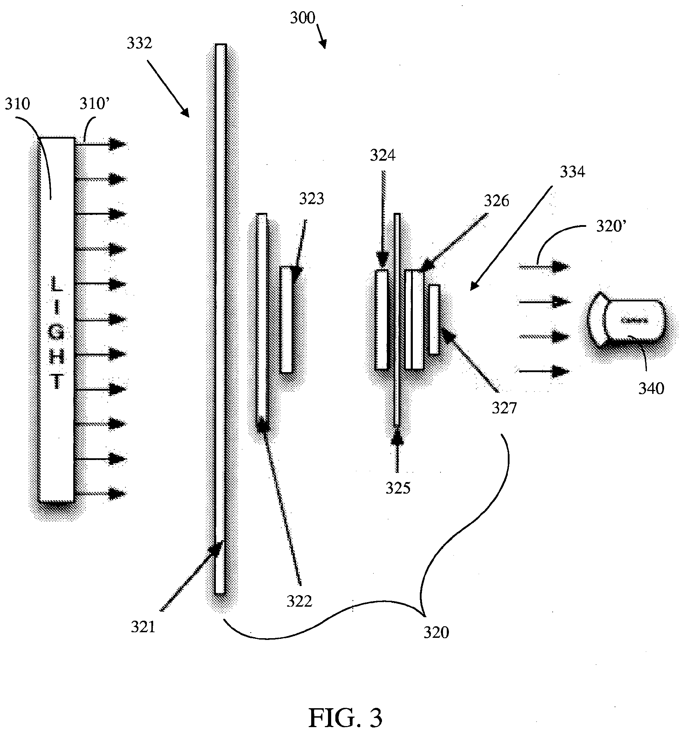

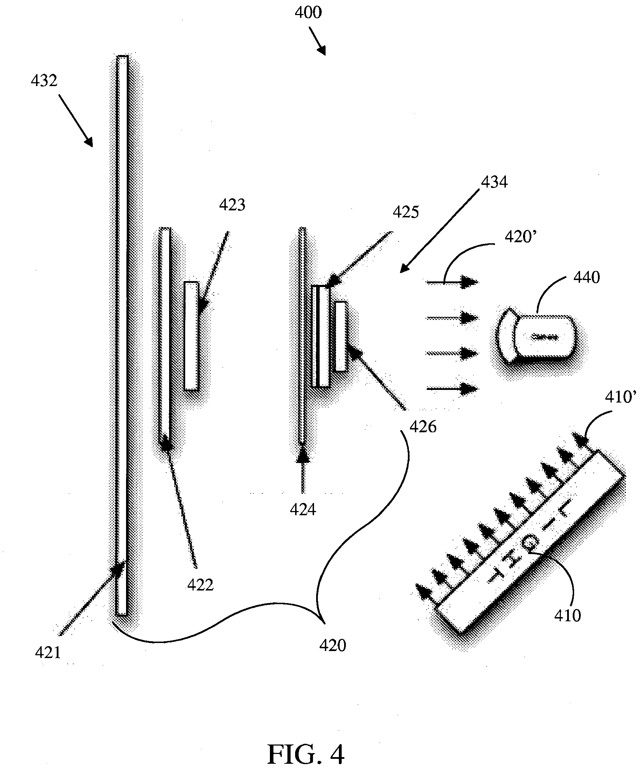

FIGS. 3 and 4 exemplify traditional zoned lighting systems. FIG. 3 illustrates a traditional backlighting system 300 for inspecting an absorbent article 320 comprising seven individual components 321, 322, 323, 324, 325, 326, 327. The absorbent article 320 comprises a back side 332 and a front side 334. An LED light source 310 positioned near the back side 332 of the article 320 emits light 310' towards the back side 332 of the article 320; filtered light 320' is transmitted through the article 320 and a camera 340 captures an image of the article 320. FIG. 4 illustrates a traditional frontlighting system 400 for inspecting an absorbent article 420 comprising six individual components 421, 422, 423, 424, 425, 426. The absorbent article 420 comprises a back side 432 and a front side 434. An LED light source 410 positioned near the front side 434 of the article 420 emits light 410' towards the front side 434 the article 420; reflected light 420' is directed towards a camera 440 that captures an image of the article 420. Neither of these source-lighting systems comprises the digital light mask of the present invention.

### Digital Light Mask

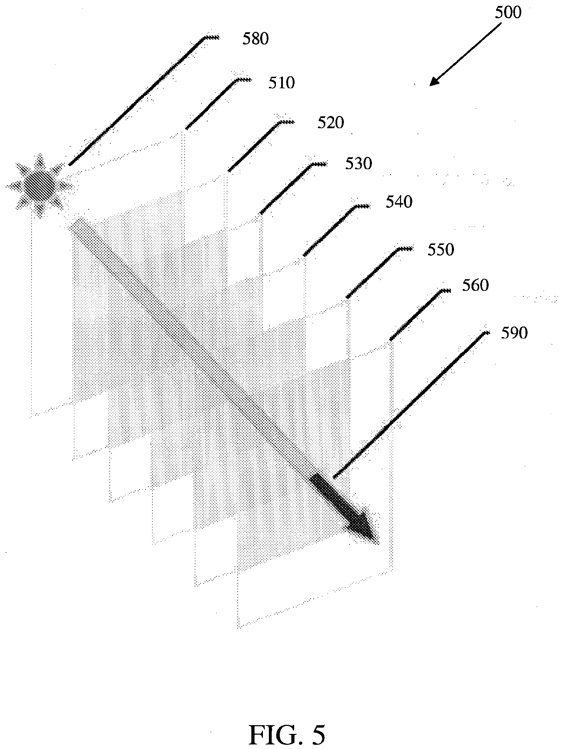

Implementation of an extremely high resolution attenuation field can be readily achieved through the use of a *pixel matrix* digital light mask placed in front of a highly uniform backlight, as shown in FIG. 5. FIG. 5 depicts a typical LCD panel (single pixel) 500, comprising a rear glass 510, a polarizing film 520, a liquid crystal 530, an optional color filter 540, a polarizing film 550, and a front glass 560. Also shown are a light source 580 and a light output 590. Individual pixels are electronically addressable and can be individually adjusted such that their relative transmissivity determines the amount of light allowed to pass through their respective area. A continuously varying attenuation field of high resolution compensation for imaging purposes can now be created through the manipulation of a myriad of individual pixels rather than the previously described coarse regions. The optional color filter typically comprises arrays of red, green, and blue filters (*e.g.,* as found in a color monitor).

LCD pixel matrix technology is commonly utilized in the construction of commercially available televisions and computer monitors which are normally designed to accommodate human visual perception. However, when applied as backlights for automated image inspection systems, existing LCD monitors are incapable of producing sufficient amounts of output intensity required for high speed product inspection on manufacturing lines. This limitation can be eliminated by replacing the low intensity backlight in a standard LCD display (*typically fluorescent*) with a high intensity LED automated image inspection system backlight. The utilization of an LCD element in conjunction with a traditional system LED backlight provides a significant step change in performance versus any traditional method commercially available in the field of automated image inspection systems. In other embodiments, the source light need not be an LED light, but may be any light source, such as infrared light, ultraviolet light, white light, or others. A backlight may be chosen based upon the color or pattern which is desired to be generated.

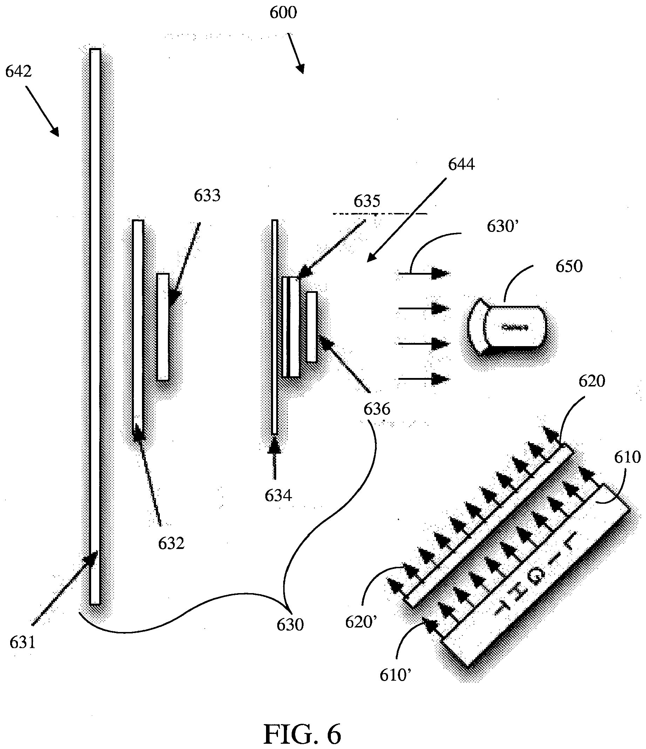

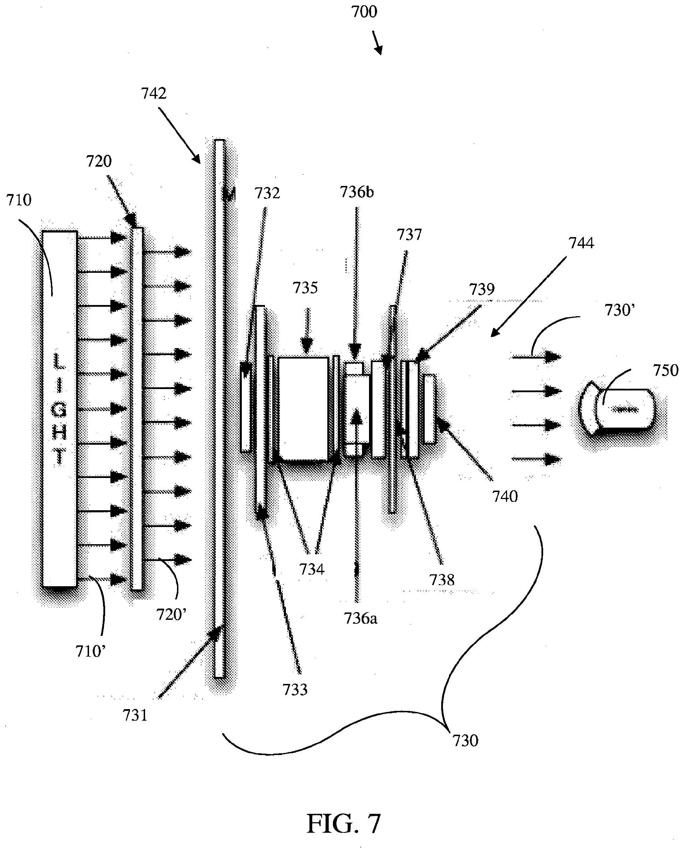

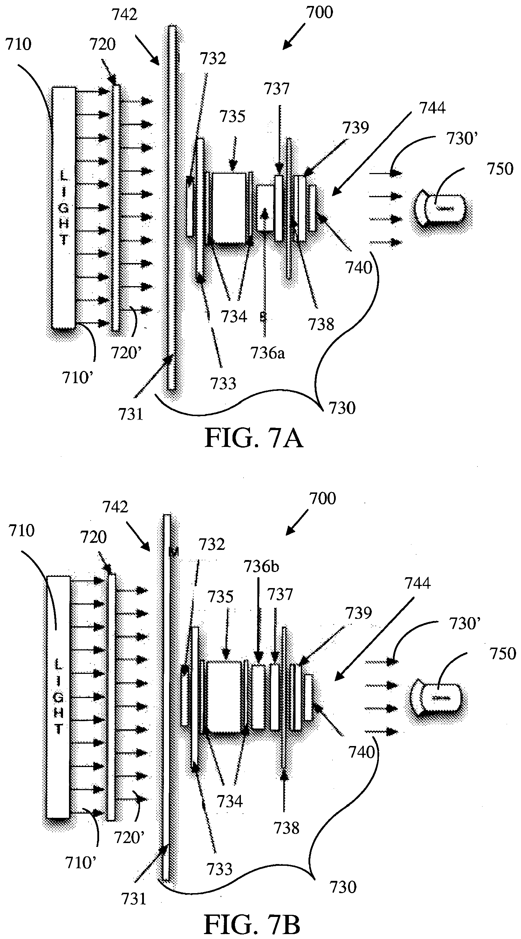

FIGS. 6 and 7A-7C illustrate digital light masking systems of the present invention. In these examples, the materials combine to create a disposable absorbent article. The arrows represent the direction of light.

FIG. 6 illustrates a frontlighting system 600 for inspecting an absorbent article 630 according to systems and methods disclosed herein. The absorbent article 630 comprises six individual components 631, 632, 633, 634, 635, 636, a back side 642, and a front side 644. A uniform light source 610 and a digital light mask 620 are positioned near the front side 644 of the article 630. The uniform light source 610 emits light 610' towards the digital light mask 620; the digital light mask 620 attenuates the emitted light 610' to create attenuated light 620'. The attenuated light 620' is directed towards the front side 644 of the absorbent article 630. Reflected light 630' is directed towards a vision system 650 that captures an image of the article 630.

FIG. 7 illustrates a backlighting system 700 for inspecting an absorbent article 730 according to systems and methods disclosed herein. The absorbent article 730 comprises eleven individual components 731, 732, 733, 734, 735, 736a, 736b, 737, 738, 739, 740, a back side 742, and a front side 744. A uniform light source 710 and a digital light mask 720 are positioned near the back side 742 of the article 730. The uniform light source 710 emits light 710' towards the digital light mask 720; the digital light mask 720 attenuates the emitted light 710' to create attenuated light 720'. The attenuated light 720' is directed towards the back side 742 of the absorbent article 730. Transmitted light 730' is directed towards a vision system 750 that captures an image of the article 730. While FIG. 7 shows a complete article 730 being inspected, it is also recognized that an article 730 may be inspected at various stages of manufacture. Accordingly, FIGS. 7A and 7B are unfinished versions of the article 730 of FIG. 7. In FIG. 7A, component 736a is present but component 736b is not present in the absorbent article 730. Similarly, in FIG. 7B, component 736b is present but component 736a is not present in the absorbent article 730. This type of versioning may facilitate inspection when components otherwise overlap or are in a complex relationship.

The digital light masking system and automated image inspection method described herein can be used with any objects or articles where very precise control of lighting is required, where the products have varying opacity, etc. In some embodiments, the systems and methods described herein are used to inspect disposable absorbent products. Further, the systems and methods described herein may be used to inspect sanitary articles. For example, thick sanitary napkins may comprise a pulp core which varies in density. Areas of increased density show up darker and areas of decreased density show up lighter.

The resulting system provides for a backlight capable of producing a compensation mask with many enhancements, wherein the enhancements are selected from the group consisting of: high resolution compensation masks (millions of pixels), complex compensation masks (any pattern), static compensation masks, dynamic compensation masks (e.g., per-product compensation, running averages, etc.), repeatability of compensation mask due to digital storage, high levels of light output required for high speed manufacturing inspection systems, and combinations thereof.

### Digital Mask Calculation, Static Method

The following describes a method for determining the optimal compensation mask for a given product under inspection. This example illustrates a possible compensation technique for a disposable absorbent sanitary article inspected by a machine vision system.

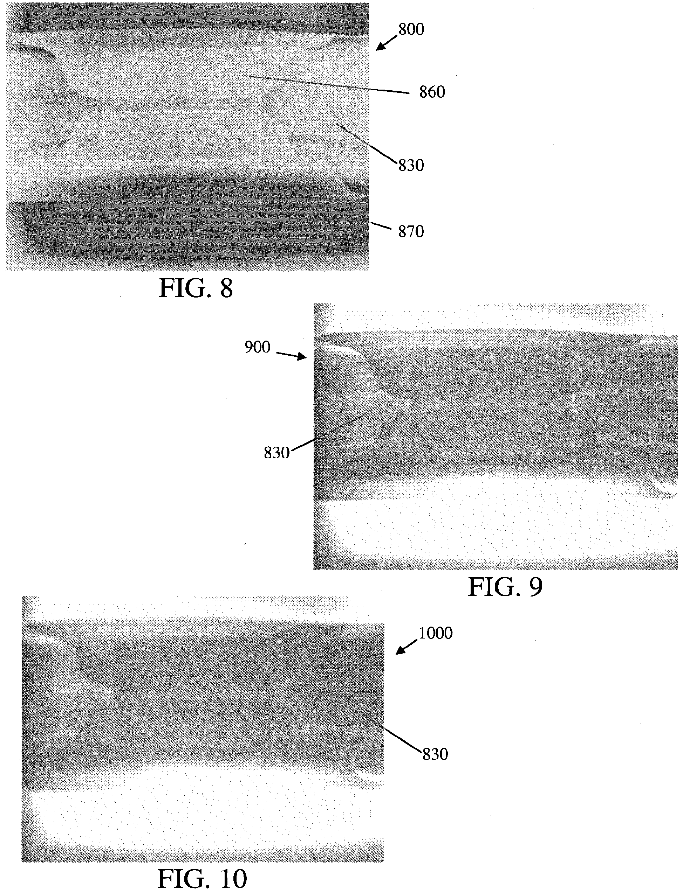

As shown in FIG. 8, given an image 800 of an exemplary disposable absorbent article 830 (here, a feminine hygiene product) which contains various levels of opacity due to differing material densities, it is immediately obvious that various regions of the image are underexposed 860 or overexposed 870. There is no lighting compensation. In order to *normalize* or *equalize* the image, the compensation mechanism must allow for under/over exposed regions of the backlight output to be *amplified*/*attenuated* respectively. The amount of compensation required will be proportional to the inverse of the image. FIG. 9 depicts the inverse of FIG. 8; it illustrates the ideal compensation 900 to equalize the image 800 of the absorbent article 830. Since the LCD can only attenuate light (no amplification), the area of the image requiring the highest backlight output will correspond to a pixel intensity of *0% attenuation* ("white" pixel). Conversely, the area of the image requiring the lowest backlight output will correspond to a pixel intensity of *100% attenuation* ("black" pixel). In the case of an LCD digital light mask, the intermediate degrees of attenuation are determined by the LCD type, LCD filter (monochrome vs. color), and the per-pixel bit-resolution of the electronics. The attenuation span between white pixels and black pixels is referred to as the *dynamic range* of the LCD.

From a practical manufacturing point of view, the inverted image 900 shown in FIG. 9 would be insufficient alone as a mask, as it does not take into account any process variation. Dependent upon the variation inherent to the manufacturing process (placement, material properties, etc.), an average of several inverted images would need to be superimposed to represent the possible variation. In this manner, an average compensation mask is determined. FIG. 10 depicts a superimposition 1000 of several instances of compensation like that shown in FIG. 9, representing typical process variation. This yields a desirable compensation mask. In the case of dynamic compensation, no such averaging of products would be required, as the compensation mask could be recalculated on an individual, per-product basis.

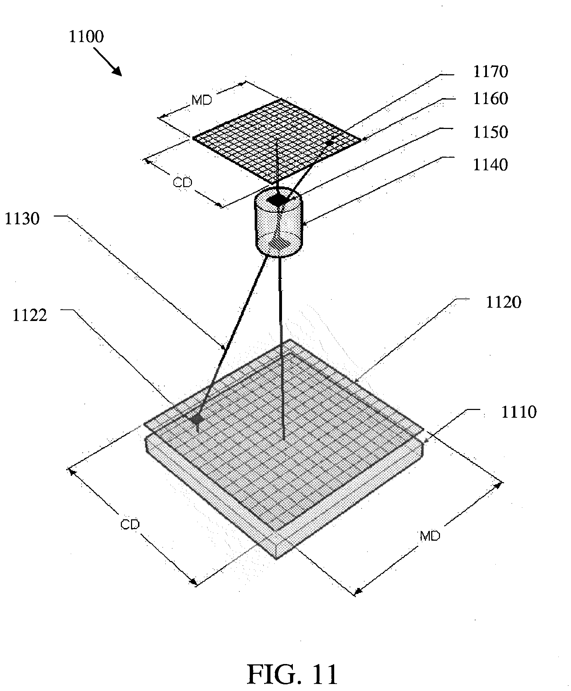

Once a compensation mask has been determined, it must be effectively *calibrated* in order to have a desirable effect on the resultant product image. For any given LCD backlight pixel there exists a unique optical path which will correspond to a target CCD (charge-coupled device) imager pixel. For explanatory purposes, an exact 1:1 mapping between the number of LCD and CCD pixels is assumed, but not necessary in practice. FIG. 11 depicts a schematic 1100 showing a backlight 1110, an LCD panel 1120, an LCD pixel 1122, an optical path 1130, a lens 1140, a camera CCD 1150, a camera CCD (zoomed) 1160, and a CCD pixel 1170. The schematic 1100 shows an optical path 1130 of an LCD pixel 1122 affecting camera CCD pixel 1170 light. (Note: FIG. 11 greatly exaggerates the scale of the camera CCD 1150/1160 for illustrative purposes.) The two-dimensional array of optical paths 1130 defining the relationship between LCD backlight 1110 pixels 1120 and target CCD pixels 1170 is determined by the physical geometry of the setup, the resolution of LCD/CCD, and the focusing elements (e.g. lenses 1140) used by the imaging device. Any combination of the following operations may be required in order to calibrate the LCD digital light mask to the CCD imaging system; accordingly, operations are selected from the group consisting of: gain/offset, MD translation, CD translation, scale transformation, rotational transformation, MD inversion/flipping (optics may invert image), CD inversion/flipping (optics may invert image), distortion removal (optics may distort image), and combinations thereof. In practice, the calibration procedure would involve displaying various test patterns on the LCD backlight, and recording the resultant images on the CCD. Based on this information, the required transformations listed above can be determined.

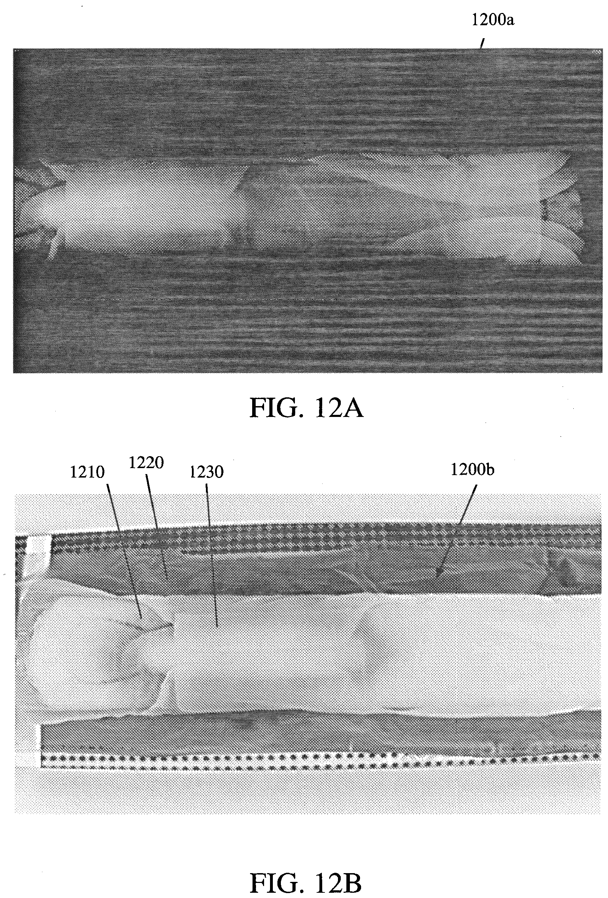

FIG. 12A shows an image of an exemplary disposable absorbent article 1200a which was not corrected, and FIG. 12B shows an image of an exemplary disposable absorbent article 1200b which was corrected according to the systems and methods described herein. In the corrected article 1200b image, more components (such as a pad 1210, a wrapper 1220, and a tape 1230) are visible than are visible in the uncorrected article 1200a image.

### Traditional Zoned-Backlight vs. Digital Light Masking Methodology

The following analysis serves to illustrate, in an idealized manner, the fundamental differences between the traditional *zoned-backlight* versus the inventive *digital light masking* (*e.g.,* LCD backlight) methodology. A zoned-backlight is defined as any backlight which contains two or more distinct groups of lighting source elements (*e.g.* LEDs) under independent electronic intensity control. Refer to the *Background of the Invention* section of the instant application for further information. The software used for this analysis is ImageJ (see Rasband, W.S., ImageJ, U. S. National Institutes of Health, Bethesda, Maryland, USA, http://imagej.nih.gov/ij/, 1997-2011; http://rsbweb.nih.gov/ij/docs/index.html), an open source image editor, as well as a 3D surface plotter plug-in for ImageJ (see http://rsbweb.nih.gov/ij/plugins/surface-plotter.html).

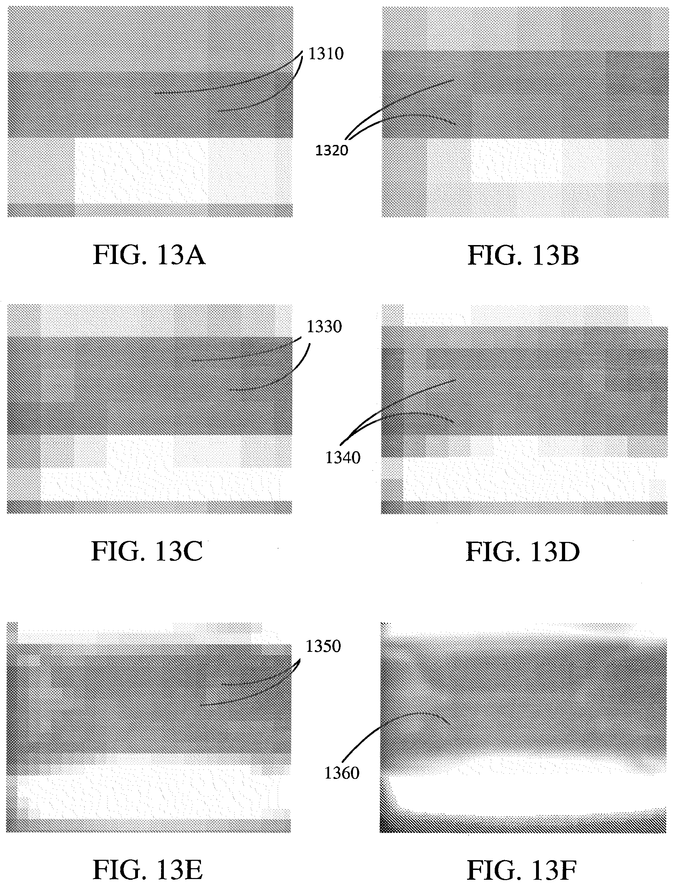

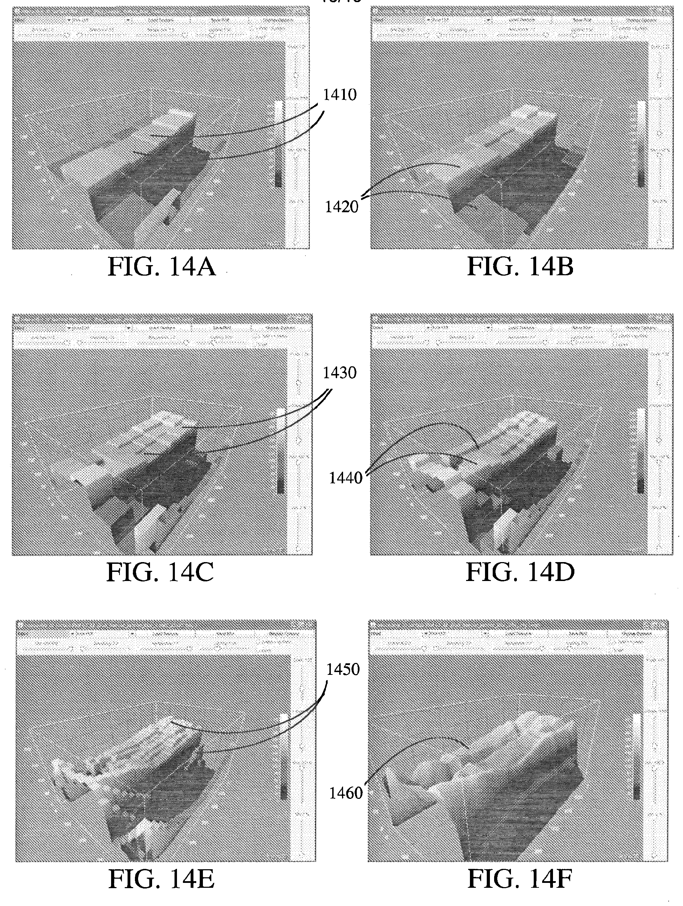

In order to illustrate the vast difference in compensation capabilities between the two methodologies, consider the sequence of 2D and 3D images illustrated in FIGS. 13A-13F and FIGS. 14A-14F, respectively. These figures illustrate increasing fidelity of approximation to FIG. 10 as the number of zones increases throughout the sequences FIGS. 13A-13F and FIGS. 14A-14F. So, FIGS. 13A and 14A show 150x150 pixel zones 1310,1410; FIGS. 13B and 14B show 100x100 pixel zones 1320,1420; FIGS. 13C and 14C show 75x75 pixel zones 1330,1430; FIGS. 13D and 14D show 50x50 pixel zones 1340,1440; FIGS. 13E and 14E show 25x25 pixel zones 1350,1450; and FIGS. 13F and 14F show that a limiting case is a continuous field 1360,1460. FIG. 13A represents breaking a backlight into twenty discrete zones 1310 and adjusting to approximate the example compensation mask of FIG. 10. For perspective, for a traditional zoned-backlight delivering twenty independent zones of intensity, adjustment represents a high level of complexity to achieve practically, with the degree of practicality decreasing geometrically along with the sequences shown in FIGS. 13A-F and 14A-F. The final images in each sequence (FIG. 13F and FIG. 14F) represent an approximation made with *307,200* independent pixels *(640 x 480 pixel grid),* and represents the capability of a very modest resolution LCD display. In practice, modern commercially available LCD panels have resolutions which range easily up into the millions of pixels.

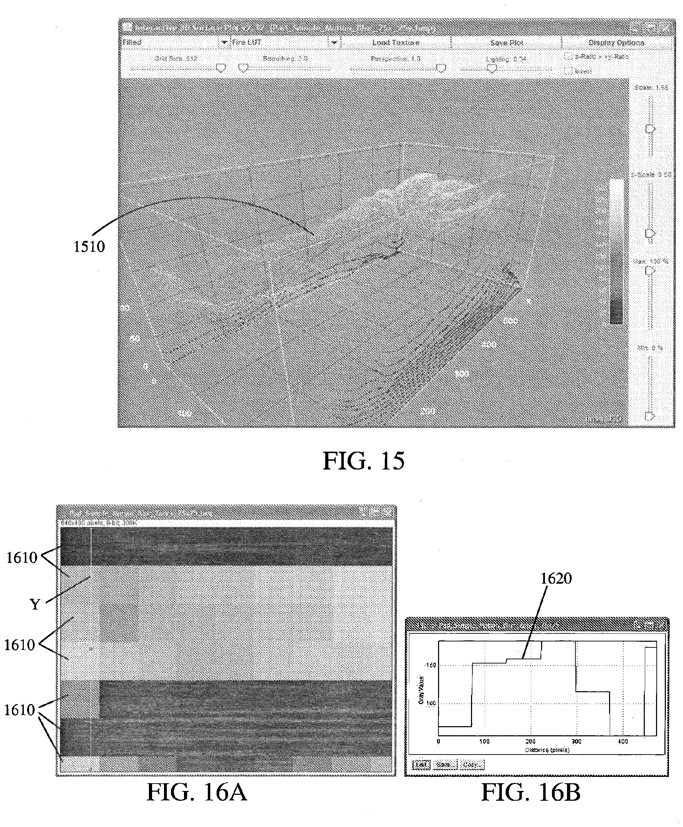

Once the resolution of the digital light mask (*e.g*., backlight LCD) surpasses that of the CCD imaging device, the resultant compensation mask is no longer discrete from the camera's point of view, and rather is better described as a *continuous field.* FIG. 15 illustrates a 3D contour plot showing no discontinuities in the complex gradients used to exactly compensate the image. Thus, FIG. 15 illustrates achievement of a continuous field 1510.

In order to better illustrate the discontinuities inherent to any practical implementation of a zoned-backlight, cross sections of the resultant light output can be examined. FIGS. 16A and 16B show a cross-sectional plot spanning seven adjacent idealized zones 1610 indicated by a yellow line Y (located on the left-hand side of the plot). This example cross section 1620 of 75x75 pixel zones is *discrete.* Note the existence of highly undesirable discontinuities in the light output. The existence of high contrast discontinuities effectively serve to degrade the signal-to-noise ratio of the backlight compensation, as the discontinuities can appear as undesirable *false edges* in the machine vision system.

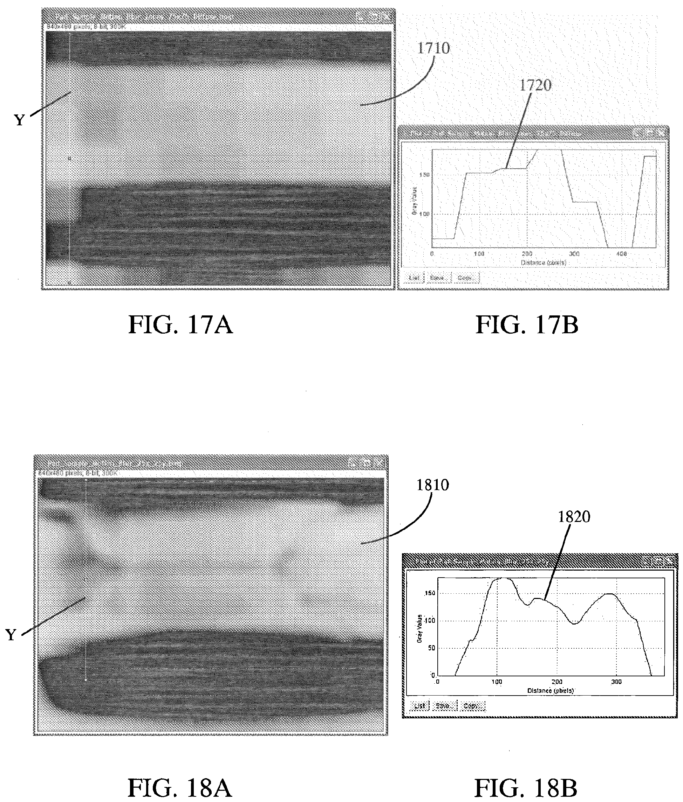

In practice, no zoned-backlight can deliver such perfectly defined perimeters as illustrated in FIGS. 16A and 16B. The *sharpness* of the backlight zones will be highly subject to the physical construction dimensions, the LED lens angles, and any diffusion/refraction layers used. FIGS. 17A and 17B show a more realistic zoned-backlight example 1710, in which 33% diffusion is assumed. This example cross section 1720 of 75x75 pixel zones is *still discrete.*

Despite taking into account the diffuse case, the corresponding cross-sectional plots still demonstrate an inherently discrete nature with discontinuities appearing now as gradients between zones. It should be noted that the exact profile of the gradient between adjacent zones will typically never be perfectly linear as shown, and rather will be a complex superposition of the light output from adjacent zones. For this reason, a zoned-backlight is exceptionally difficult to set up.

In the case of the digital light masking methodology, the compensation mask is not fundamentally forced to take on any (typically undesirable) discrete profiles. FIGS. 18A and 18B show a cross-sectional plot spanning thousands of adjacent LCD backlight pixels 1810 indicated by a yellow line Y on the plot. The example cross-section (yellow line) of compensation field is a continuous curve 1820. Note the non-linear property of the cross-sectional plot versus the previously mentioned discrete zoned-backlight plots.

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular systems and methods of the present invention have been illustrated and described, it would be understood to those skilled in the art that various other changes and modifications can be made without departing from the scope of the invention. It is therefore intended to cover in the appended claims all such changes and modifications that are within the scope of this invention.

## Claims

1. A method for automated image inspection, comprising the steps of:
a) generating a video signal (230);
b) providing a source light (220) which outputs emitted light;
c) providing a digital light mask (240) which attenuates the emitted light;
d) directing the attenuated light towards an article (250); and
e) inspecting the article (250) with a vision system (260),
**characterized in that** the video signal (230) determines a digital light mask compensation.

2. The method according to Claim 1, wherein the attenuated light forms complex lighting patterns.

3. The method according to any one of the preceding claims, wherein the source light (220) is uniform, high-efficiency, or LED.

4. The method according to any one of the preceding claims, wherein the source light (220) is monochrome or color.

5. The method according to any one of the preceding claims, wherein the source light (220) is selected from the group consisting of a backlight, a frontlight, a sidelight, a toplight, a bottomlight, or combinations thereof.

6. The method according to any one of the preceding claims, wherein the article comprises desired features, and wherein the source light (220) enhances contrast of the desired features through reflection, transmission, absorption, or combinations thereof.

7. The method according to any one of the preceding claims, wherein the article comprises non-desired features, and wherein the source light (220) attenuates contrast of the non-desired features through reflection, transmission, absorption, or combinations thereof.

8. The method according to any one of the preceding claims, wherein the digital light mask (240) comprises pixel matrices, an LCD panel, or at least two LCD pixels.

9. The method according to any one of the preceding claims, wherein the digital light mask (240) is monochrome or color.

10. The method according to any one of the preceding claims, wherein the digital light mask (240) is static or dynamic.

11. The method according to any one of the preceding claims, wherein the vision system (260) is an online machine vision system preferably comprising a camera.

12. The method according to any one of the preceding claims, further comprising an intensity controller (210) associated with the source light (220), wherein the intensity controller (210) controls voltage and current to the source light (220).

13. The method according to any one of Claims 1-12, wherein the article (250) inspected is a disposable absorbent article.

## Patentansprüche

1. Verfahren zur automatisierten Bildinspektion, umfassend die folgenden Schritte:
a) Erzeugen eines Videosignals (230);
b) Bereitstellen eines Quellenlichts (220), das emittiertes Licht ausgibt;
c) Bereitstellen einer digitalen Lichtmaske (240), die das emittierte Licht abschwächt;
d) Richten des abgeschwächten Lichts auf einen Artikel (250); und
e) Überprüfen des Artikels (250) mit einem Sichtsystem (260),
**dadurch gekennzeichnet, dass** das Videosignal (230) eine digitale Lichtmaskenkompensation bestimmt.

2. Verfahren nach Anspruch 1, wobei das abgeschwächte Licht komplexe Beleuchtungsmuster bildet.

3. Verfahren nach einem der vorstehenden Ansprüche, wobei das Quellenlicht (220) gleichmäßig, von hoher Effizienz oder LED-Licht ist.

4. Verfahren nach einem der vorstehenden Ansprüche, wobei das Quellenlicht (220) monochrom oder farbig ist.

5. Verfahren nach einem der vorstehenden Ansprüche, wobei das Quellenlicht (220) ausgewählt ist aus der Gruppe bestehend aus einem Licht von hinten, einem Licht von vorne, einem Licht von der Seite, einem Licht von oben, einem Licht von unten oder Kombinationen davon.

6. Verfahren nach einem der vorstehenden Ansprüche, wobei der Artikel gewünschte Merkmale umfasst und wobei das Quellenlicht (220) den Kontrast der gewünschten Merkmale durch Reflexion, Transmission, Absorption oder Kombinationen davon verstärkt.

7. Verfahren nach einem der vorstehenden Ansprüche, wobei der Artikel nicht gewünschte Merkmale umfasst und wobei das Quellenlicht (220) den Kontrast der nicht gewünschten Merkmale durch Reflexion, Transmission, Absorption oder Kombinationen davon abschwächt.

8. Verfahren nach einem der vorstehenden Ansprüche, wobei die digitale Lichtmaske (240) Pixelmatrizen, ein LCD-Feld oder mindestens zwei LCD-Pixel umfasst.

9. Verfahren nach einem der vorstehenden Ansprüche, wobei die digitale Lichtmaske (240) monochrom oder farbig ist.

10. Verfahren nach einem der vorstehenden Ansprüche, wobei die digitale Lichtmaske (240) statisch oder dynamisch ist.

11. Verfahren nach einem der vorstehenden Ansprüche, wobei das Sichtsystem (260) ein Online-Maschinen-Sichtsystem ist, das vorzugsweise eine Kamera umfasst.

12. Verfahren nach einem der vorstehenden Ansprüche, ferner umfassend einen zu dem Quellenlicht (220) gehörigen Intensitätsregler (210), wobei der Intensitätsregler (210) Spannung und Strom zum Quellenlicht (220) regelt.

13. Verfahren nach einem der Ansprüche 1 bis 12, wobei der überprüfte Artikel (250) ein Einweg-Absorptionsartikel ist.

## Revendications

1. Procédé destiné à une opération d'inspection d'image automatisée comprenant les étapes consistant à :
a) générer un signal vidéo (230) ;
b) fournir une lumière source (220) qui délivre de la lumière émise ;
c) fournir un masque de lumière numérique (240) qui atténue la lumière émise ;
d) diriger la lumière atténuée vers un article (250) ; et
e) inspecter l'article (250) avec un système de vision (260) ;
**caractérisé en ce que** le signal vidéo (230) détermine une compensation de masque de lumière numérique.

2. Procédé selon la revendication 1, dans lequel la lumière atténuée forme des motifs d'éclairage complexes.

3. Procédé selon l'une quelconque des revendications précédentes, dans lequel la lumière source (220) est uniforme, à rendement élevé ou LED.

4. Procédé selon l'une quelconque des revendications précédentes, dans lequel la lumière source (220) est monochrome ou colorée.

5. Procédé selon l'une quelconque des revendications précédentes, dans lequel la lumière source (220) est choisie dans le groupe constitué de rétroéclairage, éclairage avant, éclairage latéral, éclairage par le haut, éclairage par le bas, ou leurs combinaisons.

6. Procédé selon l'une quelconque des revendications précédentes, dans lequel l'article comprend des caractéristiques souhaitées, et dans lequel la lumière source (220) améliore le contraste des caractéristiques souhaitées par réflexion, transmission, absorption ou leurs combinaisons.

7. Procédé selon l'une quelconque des revendications précédentes, dans lequel l'article comprend des caractéristiques non souhaitées, et dans lequel la lumière source (220) atténue le contraste des caractéristiques non souhaitées par réflexion, transmission, absorption ou leurs combinaisons.

8. Procédé selon l'une quelconque des revendications précédentes, dans lequel le masque de lumière numérique (240) comprend des matrices de pixels, un panneau LCD ou au moins deux pixels LCD.

9. Procédé selon l'une quelconque des revendications précédentes, dans lequel le masque de lumière numérique (240) est monochrome ou coloré.

10. Procédé selon l'une quelconque des revendications précédentes, dans lequel le masque de lumière numérique (240) est statique ou dynamique.

11. Procédé selon l'une quelconque des revendications précédentes, dans lequel le système de vision (260) est un système de vision de machine en ligne comprenant de préférence une caméra.

12. Procédé selon l'une quelconque des revendications précédentes, comprenant en outre un contrôleur d'intensité (210) associé à la lumière source (220), dans lequel le contrôleur d'intensité (210) contrôle la tension et le courant vers la lumière source (220).

13. Procédé selon l'une quelconque des revendications 1 à 12, dans lequel l'article (250) inspecté est un article absorbant jetable.
